# FASCICULE DE BREVET EUROPEEN

(11) **EP 2 831 490 B1**
(45) Date de publication et mention de la délivrance du brevet: **28.09.2016**
(21) Numéro de dépôt: 13712867.4
(22) Date de dépôt: 28.02.2013
(51) Int. Cl.: F17C 5/06

(54) **DISPOSITIF ET PROCÉDÉ DE REMPLISSAGE DE RÉSERVOIR**
VORRICHTUNG UND VERFAHREN ZUR TANKBEFÜLLUNG
TANK FILLING DEVICE AND METHOD

(30) Priorité: 27.03.2012 FR 1252709
(43) Date de publication de la demande: 04.02.2015
(73) Titulaire: L'Air Liquide Société Anonyme pour l'Etude et l'Exploitation des Procédés Georges Claude, 75007 Paris (FR)
(72) Inventeur: AIGOUY, Gérald, F-73110 La Croix de la Rochette (FR); BUTTERWORTH, James, F-38600 Fontaine (FR)
(74) Mandataire: De Cuenca, Emmanuel Jaime
(86) Numéro de dépôt international: PCT/FR2013/050412
(87) Numéro de publication internationale: WO 2013/144470

(56) Documents cités:
- WO-A1-2010/146448
- WO-A1-2011/049466
- US-A- 3 871 179
- US-A1- 2006 016 512
- US-A1- 2007 257 043
- US-A1- 2010 307 636

## Description

La présente invention concerne un dispositif et un procédé de remplissage de réservoir.

L'invention concerne plus particulièrement un dispositif de remplissage d'un réservoir avec un gaz sous pression, notamment avec de l'hydrogène sous pression, comprenant une source de gaz sous pression, un circuit de transfert de gaz depuis la source vers le réservoir, le circuit de transfert comprenant un organe de détente et de refroidissement du gaz pour abaisser la pression et la température du gaz de la source à des valeurs respectives déterminées en vue du remplissage du réservoir.

L'invention s'applique notamment au remplissage de réservoirs d'hydrogène gazeux à haute pression, par exemple au remplissage de réservoirs à des pressions comprises entre 200 et 1000bar, par exemple entre 300 et 800bar.

Notamment pour les applications automobiles utilisant l'hydrogène comme source d'énergie, le remplissage de tels réservoirs doit être réalisé de façon relativement rapide (quelques minutes). La compression adiabatique de l'hydrogène entraîne un échauffement qui peut être incompatible avec les caractéristiques structurelles du réservoir. Un remplissage lent (plusieurs dizaines de minutes) qui limite cet échauffement est en revanche incompatible avec les contraintes des utilisateurs au sein d'une station service par exemple. Pour ces raisons, le remplissage de tels réservoirs doit être contrôlé de façon précise.

Le remplissage utilise généralement un ou plusieurs compresseurs et/ou des capacités tampon qui sont utilisées pour assurer un remplissage du réservoir « en cascade ». Une solution connue consiste notamment à refroidir le gaz à haute pression avant son entrée dans le réservoir pour compenser l'échauffement.

Le refroidissement est obtenu typiquement au moyen d'un groupe froid ou une réserve d'azote liquide et une boucle de refroidissement. (cf. par exemple US2007257043A1)

Ces installation sont cependant relativement coûteuses et difficiles à piloter afin d'atteindre des remplissages rapides et suffisamment efficaces.

Un but de la présente invention est de pallier tout ou partie des inconvénients de l'art antérieur relevés ci-dessus.

A cette fin, le dispositif selon l'invention, par ailleurs conforme à la définition générique qu'en donne le préambule ci-dessus, est essentiellement caractérisé en ce que l'organe de détente et de refroidissement du gaz comprend un réfrigérateur réalisant une détente du gaz selon un cycle thermodynamique de type Stirling ou Ericsson, le réfrigérateur étant alimenté sélectivement en gaz provenant de la source, au moins une partie du gaz refroidi et détendu fourni au réservoir étant extrait du réfrigérateur.

Cette particularité présente un très grand intérêt, notamment pour les remplissages rapides de réservoirs à haute pression, tels que ceux mis en oeuvre dans les stations de distribution d'hydrogène pour l'automobile. L'invention proposée permet de réaliser, à partir d'une source de pression à 1000bar par exemple, une détente et un refroidissement capable de remplir le réservoir d'une automobile vide en hydrogène jusqu'à 850bar par exemple, en moins de trois minutes. Durant ce procédé, le détendeur formé par le réfrigérateur fournit du gaz froid par extraction de l'énergie de pression du gaz, ce qui permet d'éviter l'échauffement du réservoir causé par le remplissage brutal. En effet, les procédés courants de distribution d'hydrogène ne pouvant pas être réalisés à l'aide des détendeurs à extractions d'énergies classiques, l'échauffement des réservoirs est évité par l'emploi de systèmes de réfrigération plus couteux et plus complexes d'un point de vue technique et logistique, comme des groupes froids ou de l'azote liquide. L'invention proposée permet de palier en partie ou en totalité à cet inconvénient.

Par « réfrigération » ou « réfrigérateur », on désigne le processus thermodynamique de production de froid via un cycle thermodynamique de type Stirling ou Ericsson utilisé dans les installations cryogéniques notamment.

Dans une installation de réfrigération, le gaz de cycle est d'abord comprimé, idéalement de façon isotherme à température ambiante. Le gaz comprimé est détendu avec extraction d'énergie pour produire du gaz froid qui est utilisé comme fluide frigoporteur pour refroidir un système thermique ou pour pré-refroidir différents étages de température au sein d'un réfrigérateur étagé.

Un réfrigérateur à cycle de Claude et ses dérivés, peuvent combiner plusieurs cycles thermodynamiques comme les cycles de Brayton et de Joule Thomson. Dans une installation de cogénération pour la production de chaleur et d'électricité, un des procédés généralement mis en oeuvre consiste à comprimer et chauffer un gaz à une température plus élevée avant de le détendre. Dans ce cas, la détente avec extraction d'énergie permet de refroidir le gaz à un niveau de température plus bas, pour être réinjecté dans le cycle ou pour être utilisé comme fluide caloporteur pour un système thermique fonctionnant à une température plus basse (par exemple entre 30°C et 100°C). Typiquement, le gaz à haute pression et haute température est utilisé comme fluide caloporteur pour une utilité fonctionnant à température élevée, puis le gaz détendu à une température plus basse est utilisé comme fluide caloporteur pour une utilité fonctionnant à température moyenne.

La détente d'un gaz depuis un point de pression donné vers un point de pression plus bas avec extraction d'énergie est couramment mise en oeuvre avec deux technologies. La première englobe les machines tournantes (turbines avec mécanisme de rotation) tandis que la seconde englobe les détendeurs mécaniques (pistons avec mécanisme de translation axiale). La mise en mouvement du mécanisme de rotation (turbine) ou de translation (piston), opérée par l'expansion volumique du gaz, permet de convertir l'énergie de pression en énergie mécanique. Cette énergie mécanique produite peut être récupérée sous forme de chaleur avec un système de compression avec échangeur, d'électricité avec un alternateur, ou le cas échéant directement sous forme de force motrice. Cette conversion d'énergie de pression produit de l'énergie mécanique et du gaz froid à un niveau de pression et de température inférieur. L'énergie mécanique produite étant extraite du gaz, celui-ci sort du détendeur à un niveau d'énergie plus bas.

L'inconvénient principal des détendeurs connus décrits ci-dessus réside dans la limitation en chute de pression que peuvent supporter les mécanismes et les pièces mobiles (généralement de l'ordre de 100 bars maximum). Cette limitation complexifie les installations, qui de fait doivent étager la chute de pression sur plusieurs détendeurs disposés en série. L'invention proposée permet de palier en totalité à cet inconvénient.

L'invention propose ainsi une technologie qui réalise une extraction d'énergie par conversion de l'énergie de pression du gaz selon le cycle de Stirling ou d'Ericsson. Le dispositif utilise une détente à extraction d'énergie, par exemple selon l'un au moins des critères suivants :
- le gaz d'alimentation est fourni à une pression et température données et est détendu, par exemple en totalité, à un niveau de pression et de température plus bas,
- l'énergie de pression convertie est extraite sous forme de chaleur, d'électricité, ou le cas échéant sous forme de force motrice,
- le gaz détendu peu être utilisé comme fluide frigoporteur dans une installation de réfrigération ou caloporteur dans une installation de cogénération,
- la détente ainsi réalisée selon un cycle Stirling ou Ericsson peut être combinée avec les autres cycles thermodynamiques classiquement mis en oeuvre comme le cycle de Claude et ses dérivées, les cycles de Brayton, Joule Thomson, et Gay lussac, Rankine, Lenoir, ou tout autre cycle thermodynamique mettant en oeuvre une ou plusieurs détentes avec extraction d'énergie.

Le dispositif selon l'invention permet d'atteindre des chutes de pression inférieures ou égale à 1000bar en limitant l'emploi de pièces mécaniques mobiles.

L'invention peut concerner également un procédé et une installation de réfrigération, ou de cogénération pour la production combinée de réfrigération, chaleur, et d'électricité. L'invention peut concerner plus particulièrement un procédé pour une installation de réfrigération ou de cogénération, mettant en oeuvre la détente d'un gaz depuis un niveau de pression donnée vers un niveau de pression plus bas, avec extraction d'énergie mécanique sous forme de chaleur ou d'électricité. La détente d'un gaz avec extraction d'énergie sous forme de chaleur ou d'électricité a pour effet de refroidir le gaz détendu à un niveau de température inférieur

Par ailleurs, des modes de réalisation de l'invention peuvent comporter l'une ou plusieurs des caractéristiques suivantes :
- le réfrigérateur est un détendeur de type thermo-acoustique,
- le réfrigérateur est un détendeur de type « tube à gaz pulsé »,
- l'organe de détente et de refroidissement du gaz comprend au moins un réfrigérateur comprenant un bout froid, au moins une partie du gaz fourni au réservoir étant prélevé via une sortie de gaz située au niveau du bout froid,
- l'organe de détente et de refroidissement du gaz comprend au moins un réfrigérateur comprenant un bout froid, au moins une partie du gaz fourni au réservoir étant prélevé du réfrigérateur en une zone distincte du bout froid, le gaz prélevé étant refroidi par échange thermique avec ledit bout froid,
- l'organe de détente et de refroidissement du gaz comprend un premier et un second réfrigérateur réalisant chacun une détente et un refroidissement du gaz selon un cycle thermodynamique de type Stirling ou Ericsson, chaque réfrigérateur comprenant un bout froid respectif, dans lequel, au moins une partie du gaz fourni au réservoir est prélevé du premier réfrigérateur en une zone distincte de son bout froid et alimente en gaz le second réfrigérateur, au moins une partie du gaz fourni au réservoir étant prélevé du second réfrigérateur au niveau du bout froid de ce dernier,
- le bout froid du premier réfrigérateur est en échange thermique avec le second réfrigérateur, au niveau d'une zone du second réfrigérateur distincte de son bout froid,
- l'organe de détente et de refroidissement du gaz comprend au moins un réfrigérateur à tube pulsé comprenant un régénérateur alimenté sélectivement en gaz provenant de la source, un tube à gaz pulsé relié au régénérateur, un mécanisme de déphasage relié au tube à gaz pulsé, le réfrigérateur à tube pulsé comportant un bout froid et un bout chaud,
- la source de gaz sous pression comprend au moins l'un parmi :
- au moins un réservoir de gaz sous pression,
- un organe de compression de gaz relié à une alimentation de gaz, mis en oeuvre avant la phase de transfert de gaz vers le réservoir à remplir,
- la source de gaz sous pression comprend un système de compression de gaz mis en oeuvre pendant la phase de transfert de gaz vers le réservoir à remplir,
- le circuit de transfert de gaz comprend, entre la source et l'organe de détente et de refroidissement, au moins une vanne de contrôle sélectif du flux de gaz, notamment une vanne rotative,
- le circuit de transfert de gaz comprend, entre l'organe de détente et de refroidissement et le réservoir, au moins une vanne de contrôle sélectif du flux de gaz, notamment une vanne rotative,
- le circuit de transfert de gaz comprend, entre l'organe de détente et de refroidissement et le réservoir, au moins une vanne de régulation de la pression de gaz délivrée au réservoir, notamment un détendeur de pression à une pression fixe ou réglable,
- le circuit de transfert de gaz comprend, entre la source et l'organe de détente et de refroidissement, au moins une vanne de régulation de pression tel qu'un détendeur de pression conformé pour détendre la pression du gaz en sortie du réservoir à une valeur fixe ou réglable, de préférence réduite de50bar par rapport à la valeur de la pression au sein de la source,
- l'organe de détente et de refroidissement du gaz comprend une vanne de transfert, notamment une vanne rotative située entre les premier et second réfrigérateurs disposés en série, pour contrôler sélectivement le gaz prélevé au premier réfrigérateur en vue d'alimenter en gaz le second réfrigérateur,
- le bout chaud du au moins un réfrigérateur est en échange thermique avec un refroidisseur sélectif, notamment une boucle de refroidissement munie d'un radiateur et/ou d'un groupe froid tel qu'une réserve de frigories,
- le au moins un réfrigérateur est du type à piston mécanique mobile réalisant un cycle de travail de type Stirling ou Ericsson,
- le au moins un réfrigérateur comprend un tube pulsé comportant un déphaseur du type à piston libre coopérant avec un palier flexible résonnant,
- le au moins un réfrigérateur comprend un réfrigérateur du type à tube pulsé comprenant un déphaseur du type à réservoir tampon relié au tube pulsé via un orifice ou un conduite d'inertance,
- le au moins un réfrigérateur comprend un réfrigérateur du type à tube pulsé à structure concentrique, c'est-à-dire que le tube à gaz pulsé est disposé autour du régénérateur,
- au moins une partie du gaz prélevé du premier réfrigérateur en une zone distincte de son bout froid et qui alimente en gaz le second réfrigérateur est refroidi avant son entrée dans le second réfrigérateur par échange thermique avec le bout froid du premier réfrigérateur, le gaz fourni au réservoir étant prélevé du second réfrigérateur en un point distinct de son bout froid, ledit gaz prélevé du second réfrigérateur étant refroidit avant son entrée dans le réservoir via un échange thermique avec le bout froid du second réfrigérateur,
- la source comprend au moins un réservoir de stockage de gaz à une pression comprise entre 200 bar et 1200 bar et de préférence entre 400bar et 1000 bar

L'invention concerne également un procédé de remplissage d'un réservoir avec un gaz sous pression, notamment avec de l'hydrogène sous pression, dans lequel du gaz sous pression d'une source de gaz sous pression est transféré dans le réservoir via un circuit de transfert de gaz, et dans lequel le gaz sous pression de la source est détendu et refroidi avant son entrée dans le réservoir à remplir, le gaz à haute pression de la source étant détendu et refroidi via au moins un réfrigérateur réalisant une détente du gaz selon un cycle thermodynamique de type Stirling ou Ericsson.

Selon d'autres particularités possibles :
- le au moins un réfrigérateur est alimenté sélectivement en gaz provenant de la source, le gaz détendu et refroidi fourni au réservoir ayant circulé dans le au moins un réfrigérateur,
- la source de gaz sous pression comprend un récipient contenant du gaz à une pression comprise entre 200 et 1200 bar et/ou comprend un compresseur délivrant du gaz à une pression comprise entre 200 et 1200bar,
- avant d'alimenter le ou les réfrigérateur(s), la pression du gaz provenant de la source est régulée à une première pression de valeur déterminée inférieure à la pression de la source, par exemple inférieure de 20 à 100bar par rapport à la pression de la source,
- le réfrigérateur assure une détente du gaz à une seconde pression de valeur déterminée comprise entre 100bar et 300bar,
- le débit et/ou la température du gaz fourni au réservoir est contrôlé en ajustant les valeurs des première et seconde pressions,
- le gaz à haute pression (P0) de la source est refroidi à une température comprise entre -50°C et -30°C par le au moins un réfrigérateur,
- la source de gaz sous pression délivre un gaz sous pression dont la pression augmente graduellement au fur et à mesure du transfert de gaz vers le réservoir à remplir,

L'invention peut concerner également tout dispositif ou procédé alternatif comprenant toute combinaison des caractéristiques ci-dessus ou ci-dessous.

D'autres particularités et avantages apparaîtront à la lecture de la description ci-après, faite en référence aux figures dans lesquelles :
- la figure 1 représente une vue schématique et partielle illustrant la structure et le fonctionnement d'un premier exemple de dispositif de remplissage selon l'invention,
- les figures 2 à 4 illustrent schématiquement la structure de trois variantes possibles d'un réfrigérateur de l'installation de la figure 1,
- la figure 5 représente une vue schématique illustrant un cycle thermodynamique possible que peut subir du gaz au sein de l'installation de remplissage de la figure 1,
- la figure 6 représente une vue schématique et partielle illustrant la structure et le fonctionnement d'un second exemple de dispositif de remplissage selon l'invention,
- la figure 7 représente une vue schématique et partielle illustrant la structure et le fonctionnement d'un troisième exemple de dispositif de remplissage selon l'invention,
- la figure 8 illustre un exemple de courbes de débit et de température du gaz de remplissage lors d'un remplissage mis en oeuvre par l'installation de la figure 7,
- la figure 9 illustre un exemple de courbes de pression et de température du gaz dans le réservoir rempli lors d'un remplissage mis en oeuvre par l'installation de la figure 7,
- la figure 10 illustre un détail de l'installation de la figure 7 illustrant un exemple de fonctionnement,
- la figure 11 représente une vue schématique illustrant un cycle thermodynamique possible que peut subir du gaz au sein du dispositif de remplissage des figures 7 et 9.

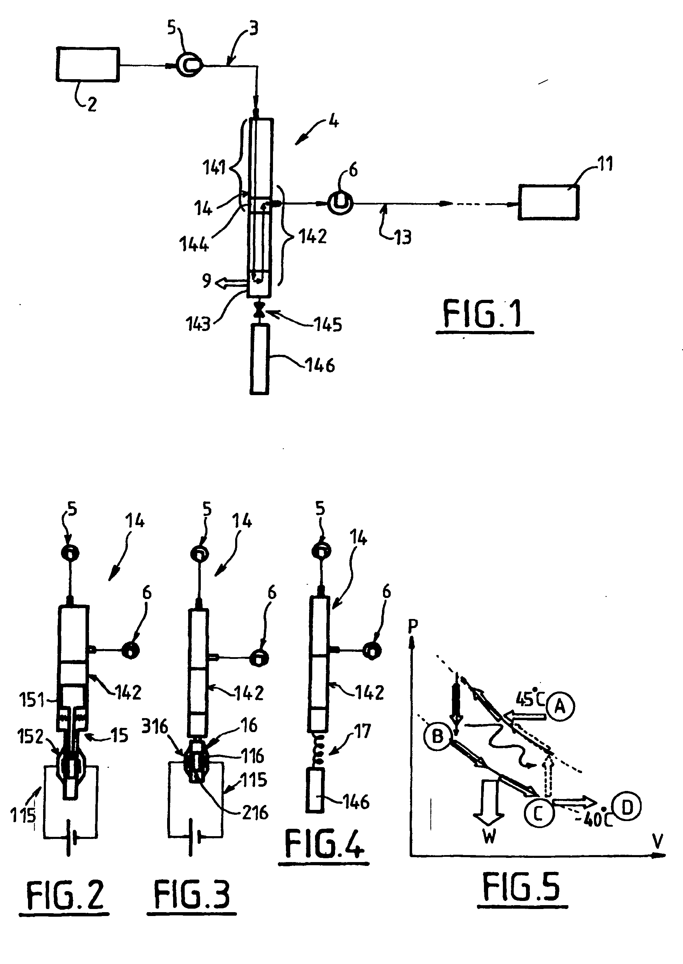

Le dispositif de remplissage d'un réservoir 11 avec un gaz sous pression illustré à la figure 1 comprend une source 2 de gaz sous pression, par exemple un ou des réservoirs stockant de l'hydrogène gazeux à une pression comprise entre 200 et 1200 bars et un circuit 3, 13 de transfert de gaz depuis la source 2 vers au moins un réservoir 11 à remplir. Le réservoir 11 à remplir appartient par exemple à un véhicule automobile.

Bien entendu, alternativement ou cumulativement au(x) réservoir(s, la source 2 peut comporter un ou plusieurs compresseurs ou tout autre organe de fourniture de gaz pressurisé approprié.

Le circuit 3, 13 de transfert comprend un organe 4 de détente et de refroidissement du gaz pour abaisser la pression et la température du gaz de la source à des valeurs respectives déterminées en vue du remplissage du réservoir 11. L'organe 4 de détente et de refroidissement du gaz comprend un réfrigérateur 14 réalisant une détente du gaz selon un cycle thermodynamique de type Stirling ou Ericsson. Dans l'exemple représenté, l'organe 4 de détente et de refroidissement est constitué d'un réfrigérateur 14 à tube pulsé (« pulse tube » en anglais). Un tel réfrigérateur 14 à tube pulsé comprend classiquement un régénérateur 141 dont une extrémité est alimentée sélectivement en gaz provenant de la source 2. Une seconde extrémité du régénérateur 141 est reliée à un tube à gaz pulsé 142. Un réservoir 146 tampon est relié au tube à gaz pulsé 142 via un orifice commandé via une vanne 145.

Le principe de fonctionnement d'un tube à gaz pulsé est le suivant : le régénérateur 141 est alimenté en gaz avec des variations de débit et de pression déterminées de façon à soumettre le gaz à une succession de compressions/détentes. Le régénérateur 141 absorbe des calories du gaz lors du cycle (par exemple au niveau d'un échangeur chaud situé à une extrémité du régénérateur) et fournit des calories au gaz lors d'une autre partie du cycle (par exemple au niveau d'un échangeur froid situé à une autre extrémité du régénérateur ou du tube à gaz pulsé). Le réservoir 146 tampon fournit du gaz au tube à gaz pulsé 142 ou reçoit du gaz du tube à gaz pulsé 142 en fonction des oscillations de pression au bout du tube 142 à gaz pulsé. La vanne 145 définit un orifice assurant un déphasage dans la progression des oscillations de pression entre le réservoir tampon 146 et le tube à gaz pulsé 142. Le tube à gaz pulsé 142 est isolé thermiquement de l'extérieur de sorte que la température du gaz en son sein varie avec la pression. Le gaz atteint une température relativement basse au niveau d'un bout froid 144 du tube 142 à gaz pulsé (par exemple entre -50°C et -30 °C) et une température relativement haute au niveau d'un bout chaud 143 du tube 142 à gaz pulsé (par exemple entre 30 et 60 °C).

Le réfrigérateur 14 est alimenté sélectivement en gaz provenant de la source 2 via une vanne 5 amont, par exemple une vanne de type vanne rotative, pour générer les oscillations de pression dans le réfrigérateur 14 (par exemple des ondes de type sinusoïdales).

Comme représenté, le réfrigérateur 14 comprend un orifice au niveau du bout froid 144 qui alimente une conduite 13 aval fournissant sélectivement un gaz froid et détendu au réservoir 11 à remplir. C'est-à-dire que le gaz détendu et refroidi par le réfrigérateur 14 destiné à remplir le réservoir 11 est extrait du tube à gaz pulsé 142. La conduite 13 aval reliant sélectivement le réfrigérateur 14 au(x) réservoir(s) à remplir comprend de préférence une vanne 6 de commande aval, par exemple une vanne rotative. C'est-à-dire que le réfrigérateur 14 fonctionne selon un circuit ouvert puisque le réfrigérateur 14 doit être réalimenté en gaz par la source 2 pour compenser le gaz fourni au réservoir 11.

Cette architecture permet de détendre et de refroidir le gaz provenant de la source 2 (par exemple à une température initiale ambiante et à une pression initiale compris entre 500bar et 1000bar) à une température plus froide et une pression inférieure (par exemple à une température comprise entre -50°C et à -40°C et une pression comprise entre 100bar et 300bar).

Ceci permet une détente et un refroidissement efficace compatible avec un remplissage rapide de réservoir(s) 11.

La figure 5 illustre un exemple de cycle thermodynamique (Pression P en fonction du volume V) pouvant être mis en oeuvre par le réfrigérateur 14 du dispositif de remplissage. Le gaz pénètre par exemple dans le réfrigérateur à 45°C et (référence A, figure 5) puis est comprimé. Le gaz subit ensuite une détente isochore (jusqu'au point B). Le gaz subit ensuite une détente (de B à C, figure 5) dans laquelle un travail W (calories ou mécanique) est fourni à l'extérieur du réfrigérateur. Du gaz détendu et refroidi (par exemple à -40°C cf. D, figure 5) est extrait pour remplir un réservoir 11. Le gaz restant dans le cycle est comprimé de façon isochore et du gaz de la source 2 est introduit dans le cycle qui recommence (A).

Bien entendu, le réfrigérateur 14 de type à gaz pulsé peut être remplacé par tout autre type de réfrigérateur assurant un cycle thermodynamique de type Stirling ou Ericsson.

La figure 2 illustre à titre d'exemple un réfrigérateur 14 qui n'est pas du type à tube pulsé mais du type comprenant un mécanisme 15 à piston 151 mécanique mobile. C'est-à-dire que le gaz est au contact d'un piston 151 coulissant, la tige du piston 151 étant couplée à un palier 152 relié à circuit électrique du type générateur électrique pour produire de l'électricité. Comme précédemment, le réfrigérateur 14 fait subir au gaz un cycle de type Stirling ou Ericsson. Le gaz est admis en entrée par exemple via une vanne 5 amont et est extrait en aval au niveau d'un bout froid via une vanne 6 aval.

La figure 3 un autre réfrigérateur 14 à tube pulsé qui se distingue de celui de la figure 1 uniquement en ce que le mécanisme de déphasage à réservoir tampon 146 et orifice de liaison (vanne 145) a été remplacé par un autre mécanisme 16 de déphasage comprenant un piston 116 libre retenu par un ressort 216, le piston 116 libre étant couplé électriquement à un palier 316 relié à un circuit électrique 115.

Enfin, la figure 4 illustre encore un autre réfrigérateur 14 à tube pulsé qui se distingue de celui de la figure 1 uniquement en ce que l'orifice de liaison (vanne 145) a été remplacé par une inertance c'est-à-dire un tube oblong, c'est-à-dire de petit diamètre et de grande longueur (ratio diamètre/longueur compris entre 100 et 10000).

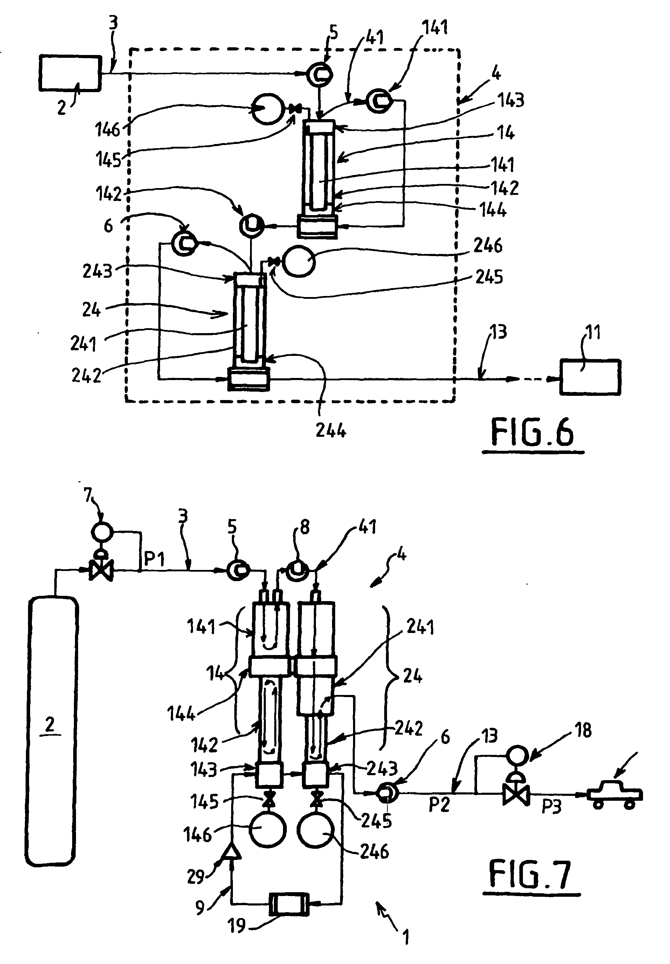

La figure 6 illustre un autre mode de réalisation de l'invention dans lequel l'organe 4 de détente et de refroidissement du gaz comprend deux réfrigérateurs 14, 24 à tube pulsé disposés en série. Un premier réfrigérateur 14 est alimenté en gaz à haute pression provenant d'une source 2 via une conduite amont 3 munie d'une vanne 5. Le premier réfrigérateur a par exemple une structure concentrique connue en soit et comprenant un bout froid 144 et un bout chaud 143. C'est-à-dire que tube 142 à gaz pulsé est disposé concentriquement autour du régénérateur 141. Comme précédemment, le premier réfrigérateur 14 comprend un système de déphasage comprenant par exemple un réservoir tampon 146 et un orifice, par exemple commandé par une vanne 145. Le gaz ayant circulé dans le premier réfrigérateur 14 est extrait au niveau de l'entrée du réfrigérateur 14, via une conduite 41 de sortie munie d'une première vanne 141. La conduite 41 de sortie est reliée à l'entrée du second réfrigérateur 24, par exemple via une seconde vanne 142. De plus, la conduite 41 de sortie échange thermiquement avec le bout froid 144 du premier réfrigérateur 14 avant d'alimenter en gaz le second réfrigérateur 24. Le second réfrigérateur 24 a par exemple également une structure concentrique C'est-à-dire que le tube 242 à gaz pulsé est disposé concentriquement autour du régénérateur 241. De plus, le second réfrigérateur 24 comprend un système de déphasage comportant, par exemple, un réservoir tampon 246 et un orifice, par exemple commandé par une vanne 245. Le second réfrigérateur 24 comporte un bout froid 244 et un bout chaud 243. Le gaz est extrait du second réfrigérateur 24 au niveau de son extrémité d'entrée via une conduite 13 aval munie d'une vanne 6 aval. La conduite 13 aval alimente sélectivement un réservoir 11 en vue de son remplissage. La conduite 13 aval est mis en échange thermique avec le bout froid 244 du second réfrigérateur 24 avant d'alimenter le ou les réservoirs 11.

C'est-à-dire que le gaz de la source 2 est détendu et refroidi selon deux étages de détente/refroidissement via deux réfrigérateurs 14, 24 de type à tube pulsé disposés en série. Contrairement au mode de réalisation de la figure 1, le gaz n'est pas extrait des réfrigérateurs 14, 24 au niveau du bout froid 144, 244 mais est mis en échange thermique avec ces bouts froids. Ceci permet de réaliser une détente et un refroidissement du gaz issu de la source en vue d'un remplissage des réservoirs 11.

Bien entendu, en variante, au lieu de réaliser un échange thermique tel que représenté à la figure 6, le gaz extrait du premier 14 et/ou du second réfrigérateur pourrait être prélevé au niveau du bout froid 144, 244 du réfrigérateur correspondant.

De même, l'architecture de la figure 6 pourrait comporter un seul réfrigérateur (au lieu de deux en série).

La figure 7 illustre encore une autre variante possible de réalisation.

Dans le mode de réalisation de la figure 7, l'organe 4 de détente et de refroidissement comprend deux réfrigérateurs 14, 24. Le premier réfrigérateur 14 est du type à tube pulsé et est alimenté en gaz provenant d'une source 2 de gaz sous pression (par exemple comprise entre 800bar et 1000bar) via une conduite 3 amont munie d'une vanne 5, par exemple rotative. La conduite 3 amont comprend de préférence une vanne 7 de régulation de pression telle qu'un détendeur disposé entre la source 2 et la vanne 5. Cette vanne 7 de régulation de pression régule sélectivement la pression du gaz fourni au premier réfrigérateur 14 à une valeur P1 déterminée (par exemple comprise entre 800bar et 900bar). Le premier réfrigérateur 14 comprend un régénérateur 141, un tube pulsé 142 et définit un bout froid 144 et un bout chaud 143. Le tube pulsé 142 est relié à un système de déphasage muni d'un réservoir 146 via une vanne 145 définissant un orifice.

Le second réfrigérateur 24 est également du type à tube pulsé. Le second réfrigérateur 24 comprend un régénérateur 241, un tube pulsé 242 et définit un bout froid 244 et un bout chaud 243. Le tube pulsé 242 est relié à un système de déphasage muni d'un réservoir 246 via une vanne 245 définissant un orifice.

Les bouts chauds 143, 243 des premier 14 et second 24 réfrigérateurs peuvent être reliés à un même système de refroidissement, par exemple une boucle 9 de fluide de refroidissement munie d'un radiateur 19 et/ou groupe froid tel qu'une réserve de frigories. Le fluide refroidi de la boucle est mis en échange thermique avec les bouts chauds 143, 243 via une pompe 29 par exemple.

Le second réfrigérateur 24 est alimenté en gaz issu du premier 14 réfrigérateur via une conduite 41 de sortie munie d'une vanne 8 de transfert, par exemple rotative. Plus précisément, le second réfrigérateur 24 est alimenté en gaz issu de l'extrémité d'entrée du premier 14 réfrigérateur. C'est-à-dire que le gaz effectue dans le régénérateur 141 du premier réfrigérateur un circuit ouvert symbolisé par des flèches à la figure 7. De plus, dans le tube pulsé 141 du premier réfrigérateur 14, le gaz réalise un cycle fermé symbolisé par une boucle de flèches à la figure 7.

Le gaz détendu et refroidi est extrait du second 24 réfrigérateur au niveau du bout froid 241 de ce dernier. Ce gaz détendu et refroidi alimente le ou les réservoirs 11 via une conduite 13 aval munie d'une vanne 6, par exemple rotative. Comme représenté, la conduite 13 aval comprend également de préférence une vanne 18 de régulation de pression aval tel qu'un détendeur de pression pour contrôler ou stabiliser la pression P3 du gaz fourni au réservoir 11 à une valeur déterminée (par exemple comprise entre 100bar et 200bar).

Cette architecture permet également de fournir un gaz à haute pression refroidi en vue d'un remplissage rapide à haute pression.

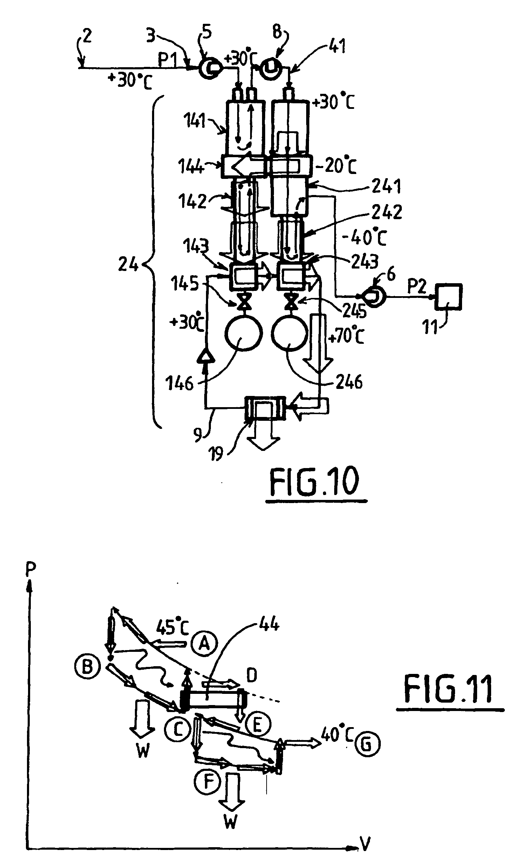

La figure 10 illustre un détail du dispositif de la figure 7 illustrant un exemple de fonctionnement possible.

Le réservoir 11 du véhicule peut être rempli en hydrogène gazeux en moins de trois minutes. Par exemple le réservoir 10 est vide à l'état initial (pression de 10bar initiale) et sa pression doit être augmentée à 700bars. Cette opération consiste à comprimer de l'hydrogène dans le réservoir 11. Ceci provoque un échauffement important du réservoir 11. Pour compenser cette élévation de température, une solution consiste à remplir le réservoir avec du gaz refroidi, par exemple à -40°C. De cette façon, la température du gaz dans le réservoir 11 ne dépassera pas 80°C par exemple.

Le procédé de remplissage peut consister à transférer de l'hydrogène gazeux vers le réservoir 11 à partir d'un stockage à très haute pression, pouvant atteindre par exemple 1000bar.

Comme visible aux figures 7 et 10, le dispositif réalise un différentiel de pression P1-P2 donné (différentiel entre la pression P1 en entrée de l'organe 4 de détente et de refroidissement et la pression P2 en sortie de ce dernier). Le débit massique fourni par le l'organe 4 de détente et de refroidissement est fonction de la vitesse d'ouverture/fermeture (rotation) des vannes 5 amont, de transfert 8 et aval 6.

Ce débit massique fourni par le l'organe 4 de détente et de refroidissement est fonction également de la pression amont P1.

La puissance de réfrigération, c'est-à-dire la capacité à fournir du gaz froid est fonction du ratio de pression P1/P2 entre l'entrée et la sortie.

Pour contrôler le débit et la température du gaz fourni au réservoir 11, les consignes de pression P1 en entrée et P2 en sortie peuvent être régulées via les vannes de régulation 7 amont et aval 18.

Les vitesses de rotation des vannes 5 amont, de transfert 8 et aval 6 peuvent également être ajustées pour contrôler le débit si les consignes de pression P1/P2 ne suffisent pas.

Un exemple de remplissage va être décrit à présent en référence à la figure 7. Avant remplissage les vannes de régulation (détendeurs) 7 et 18 sont fermées. La pression dans la source 2 est par exemple maximum, typiquement égale à 1000bar.

Dans une première phase, la vanne de régulation amont 7 est ouverte à une consigne de pression déterminée P1, par exemple égale à 800bar tandis que la vanne de régulation 18 aval est maintenue fermée. De cette façon, l'organe 4 se remplit à la pression P1 de consigne.

Ensuite, les vannes amont 5, de transfert 8 et aval 6 sont ouvertes/fermées à une fréquence déterminée (par exemple à une fréquence de rotation de 50Hz).

La vanne de régulation 18 aval étant fermée, il n'y a donc pas de différentiel de pression entre l'entrée P1 et la sortie P2 (c'est-à-dire que P1-P2=0). Il n'y a donc pas de débit de gaz vers le réservoir 11. C'est-à-dire que les vannes amont 5, de transfert 8 et aval 6 tournent sans débiter de gaz.

La vanne 18 de régulation aval est ensuite ouverte à une consigne de pression P2 déterminée (par exemple 400bar). Le différentiel de pression entre l'amont et l'aval de l'organe 4 de détente et de refroidissement P1-P2 s'établie. C'est-à-dire que l'organe 4 de détente et de refroidissement fournit alors un débit de gaz sous pression au réservoir 11.

La pression P3 du réservoir 11 à remplir augmente. La pression P3 au sein du réservoir 11 à remplir peut devenir supérieure à la consigne de pression P2 en aval de la vanne 18 de régulation aval. A partir de cet instant, bien que la vanne de régulation aval 18 s'ouvre en totalité, la pression P2 en sortie de l'organe 4 de détente et de refroidissement augmente. Ceci diminue la capacité de débit et la puissance de réfrigération de l'organe 4 de détente et de refroidissement. De même, la pression du gaz dans la source 2 diminue. Ainsi, la pression dans la source 2 peut devenir inférieure à la consigne de pression P1 de la vanne de régulation amont 7. Si cela se produit, bien que la vanne de régulation 7 amont s'ouvre en totalité, la pression P1 amont diminue. Ceci fait diminuer également la capacité de débit et de refroidissement de l'organe 4 de détente et de refroidissement.

Pour compenser la baisse de capacité de débit et de refroidissement de l'organe 4 de détente et de refroidissement, la vitesse de rotation des vannes 5, 8, 6 peut être augmentée. En effet, une augmentation de la fréquence des séquences de compression/détente permet d'augmenter le débit de gaz sortant de l'organe 4 de détente et de refroidissement.

En revanche, la perte de puissance de réfrigération n'est quant à elle pas compensée par cette gestion des vannes 5, 8, 6. C'est-à-dire que l'organe 4 de détente et de refroidissement fournit au réservoir 11 du gaz de moins en moins froid.

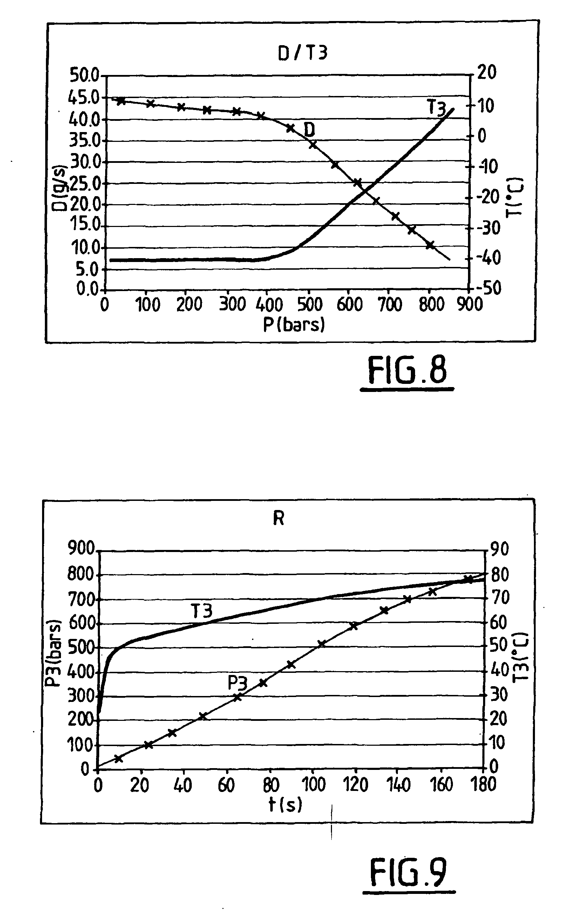

Ces phénomènes sont illustrés à la figure 8 qui représente un exemple de courbe de débit D (en gramme par seconde) et de température T3 (en °C) du gaz fourni au réservoir par l'organe 4 de détente et de refroidissement en fonction de la pression P du réservoir 11 rempli. Ainsi, lorsque la pression P3 du réservoir 11 atteint 400bar environ, le débit D de gaz de remplissage diminue et sa température T3 augmente.

La figure 9 illustre la variation de la pression P3 (en bar) et de la température T3 (en °C) du gaz à l'intérieur du réservoir 11 en cours du remplissage. La figure 7 illustre que l'organe 4 de détente et de refroidissement permet d'atteindre une pression élevée (800bar) dans le réservoir 11 en moins de trois minutes, sans pour autant atteindre des températures trop élevée (la température n'excède pas 80°C en fin de remplissage).

La figure 10 schématise un exemple de fonctionnement de l'organe 4 de détente et de refroidissement de la figure 7. Ce dernier comprend deux réfrigérateurs 14, 24 formant deux étages de réfrigération et de détente du gaz. Le premier réfrigérateur 14 est du type à tube pulsé au fonctionnement classique tandis que le second réfrigérateur 24, également du type à tube pulsé, forme essentiellement un organe de détente du gaz.

Le premier réfrigérateur 14 est utilisé pour refroidir l'échangeur froid de l'échangeur de pré refroidissement du second réfrigérateur 24. C'est-à-dire que le bout froid 144 du premier 14 réfrigérateur est en échange thermique avec un échangeur de chaleur solidaire du régénérateur 241 du second réfrigérateur 24.

Le gaz issu de la source arrive en amont 3 à une pression P1 par exemple égale à 1000bar et à une température ambiante (par exemple 30°C). La vanne 5 amont autorise le gaz à entrer dans le premier réfrigérateur 14. Une partie du gaz ressort du premier réfrigérateur 14 à cette même température de 30°C et à une pression moindre (par exemple 600bar) via la conduite de sortie 41 munie de la vanne 8 de transfert.

Le premier réfrigérateur 14 à tube pulsé est donc soumis en son sein à une onde de pression variant de 600bar à 1000bar.

Lorsque le gaz entre et sort du premier réfrigérateur 14 à tube pulsé, son énergie de pression perdue est convertie en énergie thermique, extraite au niveau de l'échangeur chaud du bout chaud 143. Cette extraction d'énergie refroidit l'échangeur bout froid 144. Comme représenté à la figure 10, le bout froid 144 du premier réfrigérateur est en échange thermique avec le régénérateur 241 du second réfrigérateur 24 et ainsi absorbe les calories du gaz entrant dans le second réfrigérateur 24. Bien qu'étant ouvert en partie chaude au niveau de réfrigérateur 141, le tube à gaz pulsé 142 du premier réfrigérateur est fermé en partie froide. C'est-à-dire que le gaz froid ne sort jamais du tube 142 à gaz pulsé. Le gaz qui ressort en partie supérieur du premier réfrigérateur 14 pour alimenter le second réfrigérateur 24 et ainsi à la même température que le gaz entrant grâce au régénérateur 141. L'étage de tube à gaz pulsé 142 ne fournit donc pas de gaz froid.

Le gaz entre donc dans le second réfrigérateur 24 à une pression intermédiaire (par exemple 600bar) entre la pression d'entrée P1 et la pression de sortie P2. Ce gaz sort du second réfrigérateur 24 à une température abaissée faible (par exemple -40°C) et à une pression P2 de sortie abaissée (par exemple 400bar). Le second réfrigérateur 24 est donc soumis à une onde de pression variant de 400bar à 600bar.

Le gaz qui rentre dans le second réfrigérateur 24 est d'abord refroidi à une température intermédiaire (-20°C) grâce à un échangeur refroidi par le bout froid du premier réfrigérateur 14. Puis de l'énergie de pression est extraite de ce gaz dans le tube à gaz pulsé 241 du second réfrigérateur 24. Ce gaz sort alors à une température plus froide (-40°C). Le second réfrigérateur 24 est donc ouvert en totalité dans sa partie froide, contrairement au premier 14 réfrigérateur.

L'énergie extraite sous forme de chaleur aux échangeurs chauds des deux réfrigérateurs peut être évacuée par exemple via une boucle 9 de circulation à eau et d'un radiateur 19 ou un groupe froid (réchauffement de l'eau de 30°C à 70°C par exemple).

Les ondes de pression peuvent être synchronisées dans les réfrigérateurs 14, 24 à l'aide des vannes 5, 8, 6. Les vannes amont 5 et aval 6 sont ouvertes en même temps alors que la vanne 8 de transfert est fermée et vis versa. Lorsque les vannes 5, 6, 8 s'ouvrent, un débit de gaz est généré par la mise en communication des volumes des machines. Ceci provoque un équilibrage des pressions et un transfert de masse. La rotation à une fréquence donnée des vannes 5, 6, 8 génère des ondes de pression proches de créneaux à basse fréquence, et proche de sinusoïdes à haute fréquence.

La figure 11 schématise le cycle thermodynamique pouvant être mis en oeuvre par le dispositif de la figure 7 (Pression P en fonction du volume V).

Le gaz pénètre par exemple dans le premier réfrigérateur 14 à 45°C et (référence A, figure 11) puis est comprimé. Le gaz subit ensuite une détente isochore (jusqu'au point B). Le gaz subit ensuite une détente (de B à C, figure 11) dans laquelle un travail W (calories ou mécanique) est fourni à l'extérieur du réfrigérateur. Du gaz du premier réfrigérateur 14 alimente le second réfrigérateur 24 (cf. D et E). Des frigories sont fournies du premier réfrigérateur au second réfrigérateur 24 (réf. 44). Le gaz réalise également un cycle de travail dans le second réfrigérateur 24 (compression de E à C puis détente isochore, puis détente F avec extraction d'énergie W pour finalement être extrait à une température basse (G, -40°C).

Le dispositif selon l'invention utilise avantageusement une onde de compression/détente, pilotée par des distributeurs ou des vannes rotatives, et peut être mise en oeuvre avec les composants internes classiquement utilisés par les machines de type Stirling quelconques.

Le dispositif selon l'invention permet de créer un flux de gaz moyen non nul en partie froide, de façon à crée un flux de gaz froid vers l'extérieur du réfrigérateur qui fait chuter la pression dans ce dernier.

Les cycles de compression/détente nécessaires aux cycles de Stirling et d'Ericsson sont réalisés par des portions de gaz différentes qui sont introduites dans le réfrigérateur au fur et à mesure de l'écoulement du gaz. Ceci assure une fonction de détente. Bien que présentant des architectures de conception voisines avec les cryo-réfrigérateurs de Gifford Mac Mahon et Solvay, l'invention proposée réalise des ondes de compression détente à l'aide de cycles de purge (détente) et de remplissage (compression) en partie froide, en lieu et place d'oscillations de pression et de débit en circuit fermé, ce qui constitue un principe de fonctionnement différent.

## Revendications

1. Dispositif de remplissage d'un réservoir (11) avec un gaz sous pression, notamment avec de l'hydrogène sous pression, comprenant une source (2) de gaz sous pression, un circuit (3, 13) de transfert de gaz depuis la source (2) vers le réservoir (11), le circuit (3, 13) de transfert comprenant un organe (4) de détente et de refroidissement du gaz pour abaisser la pression et la température du gaz de la source à des valeurs respectives déterminées en vue du remplissage du réservoir (11), **caractérisé en ce que** l'organe (4) de détente et de refroidissement du gaz comprend un réfrigérateur (14) réalisant une détente du gaz selon un cycle thermodynamique de type Stirling ou Ericsson, le réfrigérateur (14) étant alimenté sélectivement en gaz provenant de la source (2) et **en ce qu'**au moins une partie du gaz refroidi et détendu fourni au réservoir (11) est extrait du réfrigérateur (14).

2. Dispositif selon la revendication 1, **caractérisé en ce que** le réfrigérateur (14) est un détendeur de type thermo-acoustique.

3. Dispositif selon la revendication 1 ou 2, **caractérisé en ce que** le réfrigérateur (14) est un détendeur de type « tube à gaz pulsé ».

4. Dispositif selon l'une quelconque des revendications 1 à 3, **caractérisé en ce que** l'organe (4) de détente et de refroidissement du gaz comprend au moins un réfrigérateur (14) comprenant un bout froid (144), et **en ce qu'**au moins une partie du gaz fourni au réservoir (11) est prélevé via une sortie de gaz située au niveau du bout froid (144).

5. Dispositif selon l'une quelconque des revendications 1 à 3, **caractérisé en ce que** l'organe (4) de détente et de refroidissement du gaz comprend au moins un réfrigérateur (14) comprenant un bout froid (144), et **en ce qu'**au moins une partie du gaz fourni au réservoir (11) est prélevé du réfrigérateur (14) en une zone distincte du bout froid (144), le gaz prélevé étant refroidi par échange thermique avec ledit bout froid (144).

6. Dispositif selon l'une quelconque des revendications 1 à 5, **caractérisé en ce que** l'organe (4) de détente et de refroidissement du gaz comprend un premier (14) et un second (24) réfrigérateur réalisant chacun une détente et un refroidissement du gaz selon un cycle thermodynamique de type Stirling ou Ericsson, chaque réfrigérateur (14, 24) comprenant un bout froid (144, 244) respectif, dans lequel, au moins une partie du gaz fourni au réservoir (11) est prélevé du premier (14) réfrigérateur en une zone distincte de son bout froid (144) et alimente en gaz le second (24) réfrigérateur, au moins une partie du gaz fourni au réservoir (11) étant prélevé du second (24) réfrigérateur au niveau du bout froid (244) de ce dernier.

7. Dispositif selon la revendication 6, **caractérisé en ce que** le bout froid (144) du premier (14) réfrigérateur est en échange thermique avec le second (24) réfrigérateur, au niveau d'une zone du second (24) réfrigérateur distincte de son bout froid (241).

8. Dispositif selon l'une quelconque des revendications 1 à 7, **caractérisé en ce que** l'organe (4) de détente et de refroidissement du gaz comprend au moins un réfrigérateur (14) à tube pulsé comprenant un régénérateur (141) alimenté sélectivement en gaz provenant de la source, un tube à gaz pulsé (142) relié au régénérateur (141), un mécanisme de déphasage (146,145) relié au tube à gaz pulsé (142), le réfrigérateur (14) à tube pulsé comportant un bout froid (144) et un bout chaud (143).

9. Procédé de remplissage d'un réservoir (11) avec un gaz sous pression, notamment avec de l'hydrogène sous pression, dans lequel du gaz sous pression d'une source (2) de gaz sous pression est transféré dans le réservoir (11) via un circuit (3, 13) de transfert de gaz, et dans lequel le gaz sous pression de la source (2) est détendu et refroidi avant son entrée dans le réservoir (11) à remplir, **caractérisé en ce que** le gaz à haute pression de la source (2) est détendu et refroidi via au moins un réfrigérateur (14) réalisant une détente du gaz selon un cycle thermodynamique de type Stirling ou Ericsson.

10. Procédé selon la revendication 9, **caractérisé en ce que** le au moins un réfrigérateur (14) est alimenté sélectivement en gaz provenant de la source (2) et **en ce que** le gaz détendu et refroidi fourni au réservoir (11) a circulé dans le au moins un réfrigérateur (14).

11. Procédé selon la revendication 10, **caractérisé en ce que** la source (2) de gaz sous pression comprend un récipient contenant du gaz à une pression (P0) comprise entre 200 et 1200 bar et/ou comprend un compresseur délivrant du gaz à une pression comprise entre 200 et 1200bar.

12. Procédé selon la revendication 11, **caractérisé en ce que**, avant d'alimenter le ou les réfrigérateur(s) (14), la pression du gaz provenant de la source (2) est régulée à une première pression (P1) de valeur déterminée inférieure à la pression (P0) de la source (2), par exemple inférieure de 20 à 100bar par rapport à la pression (P0) de la source.

13. Procédé selon la revendication 11 ou 12, **caractérisé en ce que** le réfrigérateur (14) assure une détente du gaz à une seconde pression (P2) de valeur déterminée comprise entre 100bar et 300bar.

14. Procédé selon la revendication 13, **caractérisé en ce que** le débit et/ou la température du gaz fourni au réservoir (11) est contrôlé en ajustant les valeurs des première (P1) et seconde (P2) pressions.

15. Procédé selon l'une quelconque des revendications 9 à 14, **caractérisé en ce que** le gaz à haute pression (P0) de la source est refroidi à une température comprise entre -50°C et -30°C par le au moins un réfrigérateur (14).

## Patentansprüche

1. Vorrichtung zum Füllen eines Tanks (11) mit einem Gas unter Druck, insbesondere mit Wasserstoff unter Druck, die eine Quelle (2) von Gas unter Druck, einen Transferkreislauf (3, 13) von Gas von der Quelle (2) zu dem Tank (11) umfasst, wobei der Transferkreislauf (3, 13) ein Entspannungs- und Kühlorgan (4) des Gases umfasst, um den Druck und die Temperatur des Gases der Quelle auf jeweilige Werte zu senken, die zum Füllen des Tanks (11) bestimmt werden, **dadurch gekennzeichnet, dass** das Entspannungs- und Kühlorgan (4) einen Kühler (14) umfasst, der ein Entspannen des Gases gemäß einem thermodynamischen Zyklus des Typs Stirling oder Ericsson ausführt, wobei der Kühler (14) selektiv mit Gas, das von der Quelle (2) kommt, versorgt wird, und dass mindestens ein Teil des gekühlten und entspannten Gases, das zu dem Tank (11) geliefert wird, aus dem Kühler (14) extrahiert ist.

2. Vorrichtung nach Anspruch 1, **dadurch gekennzeichnet, dass** der Kühler (14) ein Druckminderer des thermo-akustischen Typs ist.

3. Vorrichtung nach Anspruch 1 oder 2, **dadurch gekennzeichnet, dass** der Kühler (14) ein Druckminderer des Typs "Rohr mit gepulsten Gas" ist.

4. Vorrichtung nach einem der Ansprüche 1 bis 3, **dadurch gekennzeichnet, dass** das Entspannungs- und Kühlorgan (4) des Gases mindestens einen Kühler (14) umfasst, der ein kaltes Ende (144) umfasst, und dass mindestens ein Teil des Gases, das zu dem Tank (11) geliefert wird, über einen Gasausgang, der sich im Bereich des kalten Endes (144) befindet, entnommen wird.

5. Vorrichtung nach einem der Ansprüche 1 bis 3, **dadurch gekennzeichnet, dass** das Entspannungs- und Kühlorgan des Gases mindestens einen Kühler (14) umfasst, der ein kaltes Ende (144) umfasst, und dass mindestens ein Teil des Gases, das zu dem Tank (11) geliefert wird, aus dem Kühler (14) in einem Bereich entnommen wird, der von dem kalten Ende (114) getrennt ist, wobei das entnommene Gas durch Wärmeaustausch mit dem kalten Ende (144) gekühlt wird.

6. Vorrichtung nach einem der Ansprüche 1 bis 5, **dadurch gekennzeichnet, dass** das Entspannungs- und Kühlorgan (4) des Gases einen ersten (14) und einen zweiten (24) Kühler umfasst, die jeweils ein Entspannen und ein Kühlen des Gases gemäß einem thermodynamischen Zyklus des Typs Stirling oder Ericsson ausführen, wobei jeder Kühler (14, 24) ein jeweiliges kaltes Ende (144, 244) umfasst, in dem mindestens ein Teil des zu dem Tank (11) gelieferten Gases aus dem ersten (14) Kühler in einer Zone, die von seinem kalten Ende (144) getrennt ist, entnommen wird und den zweiten Kühler (24) mit Gas versorgt, wobei mindestens ein Teil des Gases, das zu dem Tank (11) geliefert wird, aus dem zweiten (24) Kühler im Bereich des kalten Endes (244) dieses Letzteren entnommen wird.

7. Vorrichtung nach Anspruch 6, **dadurch gekennzeichnet, dass** das kalte Ende (144) des ersten (14) Kühlers in Wärmeaustausch mit dem zweiten (24) Kühler im Bereich einer Zone des zweiten (24) Kühlers, die von seinem kalten Ende (241) getrennt ist, steht.

8. Vorrichtung nach einem der Ansprüche 1 bis 7, **dadurch gekennzeichnet, dass** das Entspannungs- und Kühlorgan (4) des Gases mindestens einen Kühler (14) mit Pulsrohr umfasst, der einen Regenerator (141) umfasst, der selektiv mit Gas versorgt wird, das von der Quelle kommt, ein Rohr mit gepulstem Gas (142), das mit dem Regenerator (141) verbunden ist, einen Phasenverschiebungsmechanismus (146, 145), der mit dem Rohr mit gepulsten Gas (142) verbunden ist, wobei der Kühler (14) mit Pulsrohr ein kaltes Ende (144) und ein warmes Ende (143) umfasst.

9. Verfahren zum Füllen eines Tanks (11) mit einem Gas unter Druck, insbesondere mit Wasserstoff unter Druck, wobei das Gas unter Druck einer Quelle (2) von Gas unter Druck in den Tank (11) über einen Gastransferkreislauf (3, 13) übertragen wird, und wobei das Gas unter Druck der Quelle (2) vor seinem Eintreten in den zu füllenden Tank (11) entspannt und abgekühlt wird, **dadurch gekennzeichnet, dass** das Gas mit hohem Druck der Quelle (2) über mindestens einen Kühler (14), der ein Entspannen des Gases gemäß einem thermodynamischen Zyklus des Typs Stirling oder Ericsson ausführt, entspannt und gekühlt wird.

10. Verfahren nach Anspruch 9, **dadurch gekennzeichnet, dass** der mindestens eine Kühler (14) selektiv mit Gas versorgt wird, das von der Quelle (2) kommt, und dass das entspannte und gekühlte Gas, das zu dem Tank (11) geliefert wird, in mindestens einem Kühler (14) zirkuliert hat.

11. Verfahren nach Anspruch 10, **dadurch gekennzeichnet, dass** die Quelle (2) von Gas unter Druck einen Behälter umfasst, der Gas mit einem Druck (P0) zwischen 200 und 1200 bar umfasst und/oder einen Kompressor umfasst, der Gas mit einem Druck zwischen 200 und 1200 bar liefert.

12. Verfahren nach Anspruch 11, **dadurch gekennzeichnet, dass** der Druck des Gases, das von der Quelle (2) kommt, vor dem Versorgen des oder der Kühler (14) auf einen ersten Druck (P1) mit bestimmtem Wert, der niedriger ist als der Druck (P0) der Quelle (2), zum Beispiel um 20 bis 100 bar niedriger als der Druck (P0) der Quelle, geregelt wird.

13. Verfahren nach Anspruch 11 oder 12, **dadurch gekennzeichnet, dass** der Kühler (14) ein Entspannen des Gases auf einen zweiten Druck (P2) mit bestimmtem Wert, der zwischen 100 bar und 300 bar liegt, sicherstellt.

14. Verfahren nach Anspruch 13, **dadurch gekennzeichnet, dass** der Durchsatz und/oder die Temperatur des Gases, das zu dem Tank (11) geliefert wird, durch Einstellen der Werte des ersten (P1) und des zweiten (P2) Drucks gesteuert wird.

15. Verfahren nach einem der Ansprüche 9 bis 14, **dadurch gekennzeichnet, dass** das Gas mit hohem Druck (P0) der Quelle auf eine Temperatur zwischen -50 °C und -30 °C durch den mindestens einen Kühler (14) gekühlt wird.

## Claims

1. Device for filling a tank (11) with a pressurised gas, in particular with pressurised hydrogen, comprising a pressurised gas source (2), a circuit (3, 13) for transferring gas from the source (2) to the tank (11), the transfer circuit (3, 13) comprising a member (4) for expanding and cooling the gas in order to lower the pressure and temperature of the gas from the source to respective values determined with a view to filling the tank (11), **characterised in that** the gas expansion and cooling member (4) comprises a refrigerator (14) that expands the gas in accordance with a Stirling or Ericsson thermodynamic cycle, said refrigerator (14) being selectively supplied with gas from the source (2), and **in that** at least a portion of the cooled and expanded gas supplied to the tank (11) is extracted from the refrigerator (14).

2. Device according to claim 1, **characterised in that** the refrigerator (14) is a thermoacoustic expander.

3. Device according to claim 1 or 2, **characterised in that** the refrigerator (14) is a "pulse gas tube" expander.

4. Device according to any one of claims 1 to 3, **characterised in that** the gas expansion and cooling member (4) comprises at least one refrigerator (14) comprising a cold end (144), and **in that** at least a portion of the gas supplied to the tank (11) is extracted via a gas outlet situated at the cold end (144).

5. Device according to any one of claims 1 to 3, **characterised in that** the gas expansion and cooling member (4) comprises at least one refrigerator (14) comprising a cold end (144), and **in that** at least a portion of the gas supplied to the tank (11) is extracted from the refrigerator (14) at a separate zone from the cold end (144), the extracted gas being cooled by heat exchange with said cold end (144).

6. Device according to any one of claims 1 to 5, **characterised in that** the gas expansion and cooling member (4) comprises a first (14) and a second (24) refrigerator each expanding and cooling the gas in accordance with a Stirling or Ericsson thermodynamic cycle, each refrigerator (14, 24) comprising a respective cold end (144, 244), wherein, at least a portion of the gas supplied to the tank (11) is extracted from the first (14) refrigerator at a separate zone from the cold end (144) thereof and supplies the second (24) refrigerator with gas, at least a portion of the gas supplied to the tank (11) being extracted from the second (24) refrigerator at the cold end (244) thereof.

7. Device according to claim 6, **characterised in that** the cold end (144) of the first (14) refrigerator is in heat exchange with the second (24) refrigerator, at a zone of the second (24) refrigerator separate from the cold end (241) thereof.

8. Device according to any one of claims 1 to 7, **characterised in that** the gas expansion and cooling member (4) comprises at least one pulse tube refrigerator (14) comprising a regenerator (141) supplied selectively with gas from the source, a pulse gas tube (142) connected to the regenerator (141), a phase shift mechanism (146, 145) connected to the pulse gas tube (142), the pulse tube refrigerator (14) including a cold end (144) and a hot end (143).

9. Method for filling a tank (11) with a pressurised gas, in particular with pressurised hydrogen, wherein pressurised gas from a pressurised gas source (2) is transferred into the tank (11) via a gas transfer circuit (3, 13), and wherein the pressurised gas from the source (2) is expanded and cooled prior to the entry thereof into the tank (11) to be filled, **characterised in that** the high-pressure gas from the source (2) is expanded and cooled via at least one refrigerator (14) that expands the gas in accordance with a Stirling or Ericsson thermodynamic cycle.

10. Method according to claim 9, **characterised in that** the at least one refrigerator (14) is supplied selectively with gas from the source (2) and **in that** the expanded and cooled gas supplied to the tank (11) has circulated in the at least one refrigerator (14).

11. Method according to claim 10, **characterised in that** the pressurised gas source (2) comprises a vessel containing gas at a pressure (P0) between 200 and 1200 bar and/or comprises a compressor outputting gas at a pressure between 200 and 1200 bar.

12. Method according to claim 11, **characterised in that**, before supplying the refrigerator(s) (14), the pressure of the gas from the source (2) is regulated at a first pressure (P1) of defined value less than the pressure (P0) of the source (2), for example less by 20 to 100 bar with respect to the pressure (P0) of the source.

13. Method according to claim 11 or 12, **characterised in that** the refrigerator (14) expands the gas at a second pressure (P2) of defined value between 100 bar and 300 bar.

14. Method according to claim 13, **characterised in that** the flow rate and the temperature of the gas supplied to the tank (11) is controlled by adjusting the values of the first (P1) and second (P2) pressures.

15. Method according to any one of claims 9 to 14, **characterised in that** the high-pressure gas (P0) from the source is cooled to a temperature between -50°C and -30°C by the at least one refrigerator (14).
